# EUROPEAN PATENT SPECIFICATION

(11) **EP 1 107 426 B1**
(45) Date of publication and mention of the grant of the patent: **02.04.2003**
(21) Application number: 00126693.1
(22) Date of filing: 05.12.2000
(51) Int. Cl.: H02K 3/28, H02K 21/48, H02K 3/50

(54) **Stator of an AC generator**
Stator eines Wechselstromgenerators
Stator pour un générateur à courant alternatif

(30) Priority: 06.12.1999 JP 34592399
(43) Date of publication of application: 13.06.2001
(73) Proprietor: Kabushiki Kaisha MORIC, Shizuoka-ken (JP)
(72) Inventor: Suzuki, Hitoshi, Shuuchi-gun, Shizuoka-ken (JP); Morimatsu, Masaki, Shuuchi-gun, Shizuoka-ken (JP)
(74) Representative: Leson, Thomas Johannes Alois, Dipl.-Ing.

(56) References cited:
- US-A- 5 029 379
- US-A- 5 619 085
- US-A- 5 705 917
- US-A- 6 114 782

## Description

This invention relates to a stator having stator coils wound thereon and used for an AC generator such as a magnetogenerator.

AC generators have been known using stators with stator coils wound thereon. For example, in some AC magnetogenerators used for internal combustion engines for small vehicles such as motorcycles, a plurality of stator coils are connected in series, which are divided into two stator coil groups by means of an intermediate tap so that the electric power generated by the respective stator coil groups may be utilized separately. In this case, the electric power generated by the respective stator coil groups is used separately as power sources for lighting lamps and charging a battery.

If the rated voltage of the lamp is 12V and that of the battery 6V, then the ratio (distribution ratio) of the number of coils between stator coil groups is set to 2:1, so that voltages generated by stator coil groups are held at values a little larger than 12V and 6V, respectively. The ignition circuit of the internal combustion engine uses as a power source a battery charged by one stator coil group.

As described above, in the case where multiple stator coils are divided into a plurality of coil groups by means of intermediate taps and voltages generated by the respective coil groups are used separately, the voltage and power generated by the respective coil groups are determined by the positions of the intermediate taps. However, especially in a motorcycle, since power consumption of lamps or a battery changes largely depending on applications, a demand for changing the voltage and power generated by the coil groups may arise in response to applications or the type of the vehicle. In particular, when the number of stator coils of the generator is increased, that is, the number of poles multiplies, position changes of the intermediate taps will allow finer distribution change of the voltage and power generated by the coil groups, which strengthens such a demand all the more.

In the conventional system, since the positions of the intermediate taps are difficult to change, however, the whole generator is required to be redesigned. In such a case, the shape of the bobbin on the stator core should also be changed, and if the bobbin is formed integral in a insulating resin, the forming dies should be changed as well, which requires time and expense in designing and making the dies, resulting in a cost increase of the products. In addition, a special winding machine is often used for winding coils on the stator core, and thus setting or setup of the winding machine should also be changed.

Intermediate taps in stator windings of electrical machines are disclosed in US-A-5 029 379, US-A-5 619 085 and US-A-5 705 917.

In view of the foregoing, it is an object of this invention to provide a stator of an AC generator in which changing the positions of intermediate taps allow easy distribution change of the voltage and power generated by different coil groups without need of remodeling the bobbin or changing setup of the winding machine.

According to the invention, the object is achieved by a stator of an AC generator having stator coils wound on the pole teeth of a stator core through a bobbin made of an insulating resin, and intermediate taps provided between different stator coils and adapted to be connected to external connection wires, wherein said stator comprises a plurality of internal wiring terminals, formed on said bobbin, to which are led coil ends of two different stator coils and one of said external connection wires; a bypass circuit for connecting said coil ends of the two different stator coils led to said each internal wiring terminal; and an internal tap block insatiable in said each internal wiring terminal for connecting said coil ends of the two different stator coils to said one external connection wire, whereby the distribution ratio of said stator coils can be varied when the internal wiring terminal in which said intermediate tap block is to be inserted, is changed.

Where said AC generator is an outer-rotor type AC magnetogenerator driven by an internal combustion engine, and more than three stator coils are connected in series and can be divided into a plurality of stator coil groups by means of intermediate taps. The external connection wires led to the internal wiring terminals are wiring conductors inserted in the bobbin, thereby effecting size reduction of the stator.

In this case, a bobbin half with wiring conductors inserted therein is formed, integrally, with a plurality of internal wiring terminals; in each of the terminals are formed a terminal hole to which is led the coil end of the stator coil, and another terminal hole to which is led the inserted wiring conductor, adjacent to each other; and in the intermediate tap block adapted to be inserted in these terminal holes is provided a connection circuit for connecting the stator coil end and the wiring conductor.

A bypass circuit is provided on the internal wiring terminal, or it may be, for example, a coil wire between two stator coils, adapted to bypass through the internal wiring terminal. Also, two stator coil ends led to the internal wiring terminal may be open to each other, and a built-in bypass circuit may be provided on the bypass block or the intermediate tap block adapted to be inserted in said internal wiring terminal.

In the following, the drawings are described in short, in which:
Fig. 1 is a front view of a stator;
Fig. 2 is a perspective view of a stator core;
Fig. 3 is a front view of stator coils showing the winding direction thereof;
Fig. 4 is a sectional view taken along line IV-O-IV of Fig. 3;
Fig. 5 is an enlarged view of the cross section along line O-IV of Fig. 3;
Fig. 6 is an enlarged view of the cross section along line 0-VI of Fig. 3;
Fig. 7 is a front view of one of bobbin halves;
Fig. 8 is a view showing an arrangement of wiring conductors inserted in the same;
Fig. 9 is a perspective view of the bobbin half;
Fig. 10 shows a front view (A) of an external connection terminal as viewed in the direction of attaching a coupler and a view (B) of the coupler being inserted in the terminal; and
Fig. 11 is an illustration of position change of an intermediate tap.

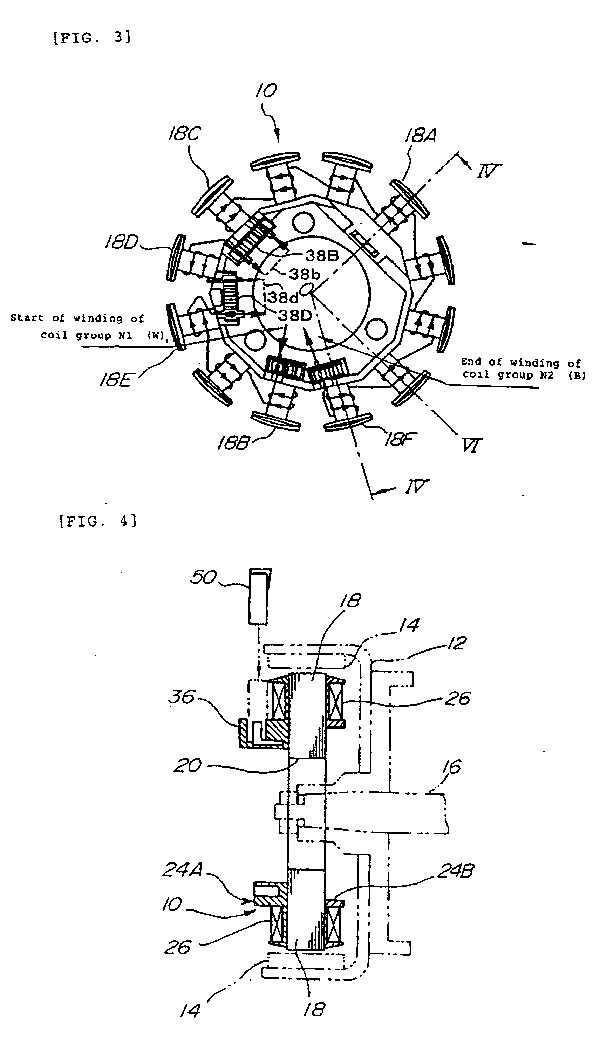

In these figures, numeral 10 designates a stator, which is combined with a rotor 12 to form an AC magnetogenerator. In Fig. 4, on the inside circumferential surface of the rotor 12 are bonded fixedly an even number of permanent magnets 14, which form pairs of magnetic poles. The rotor 12 is fixed to a crankshaft 16 of an internal combustion engine. The stator 10 is fixed to a crank case or a crank case cover, and a plurality (twelve) of radially projecting magnetic poles 18 are adapted to face the permanent magnets 14 of the rotor 12 from the inside diameter side thereof.

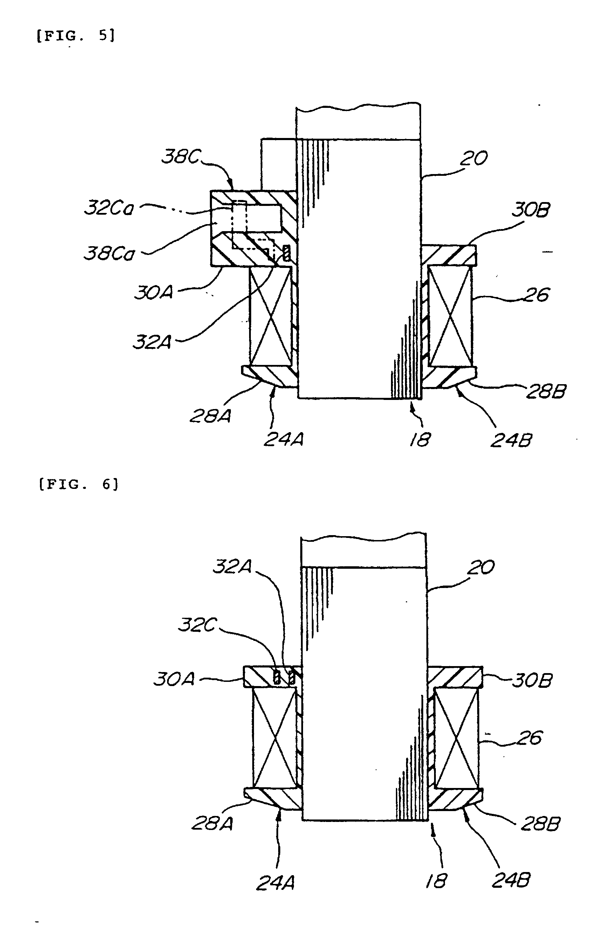

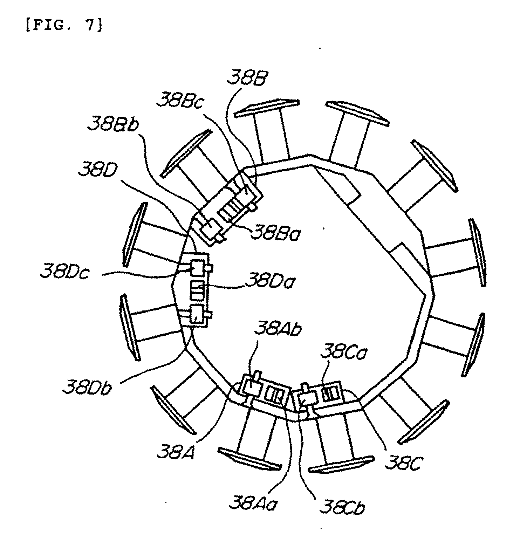

The magnetic poles of the stator 10 are constituted by a plurality of pole teeth 22 of a stator core 20, shown in Fig. 2, on which are wound stator coils 26 through a plastic bobbin 24. The stator core 20 is made of blanks of a silicon steel plate or a carbon steel plate laminated through insulating layers. The bobbin 24 is formed of a pair of bobbin halves 24A, 24B adapted to sandwich the pole teeth 22 of the stator 20 from both sides thereof, and formed, at the top and base portions of each of radially extending teeth 22, with flanges 28 (28A, 28B) and 30 (30A, 30B), respectively (see Figs. 5, 6). These bobbin halves 24A, 24B are made from an insulating resin by injection molding.

The bobbin halves 24A, 24B are each configured such that the pole teeth 22 are connected at their base portions to each other and it has an annular shape as a whole with the central part hollowed out. These bobbin halves 24A, 24B are mounted on the stator core 20, with the pole teeth 22 sandwiched from both sides thereof. The stator coils 26 are wound on the pole teeth 22 through the bobbin in a space between the flanges 28, 30 on the top and base portions of the pole teeth.

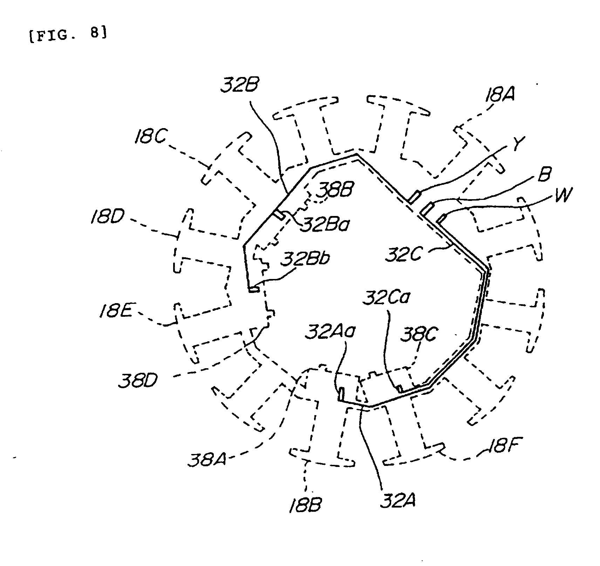

In one bobbin half 24A are inserted three wiring conductors 32 (32A, 32B and 32C) (see Fig. 8). These wiring conductors 32 are formed from a thin copper plate by blanking and bending, and inserted in an thick annular portion 24 formed along the inside circumferential edge of the bobbin half 24A. One end of these conductors is connected to certain selected stator coil 26 ends, and the other ends thereof are gathered in one external connection terminal 36.

The external connection terminal 36, as shown in Fig. 3, 7, 8, 9 and 10, is formed adjacent to and in the widthwise direction (direction of thickness parallel to the center axis of the rotor 12) of a magnetic pole 18A, and a coupler 50 is adapted to be coupled detachably to the terminal 36 from outside in the direction parallel to the magnetic pole 18A (Fig. 4, 9 and 11).

One end 32Aa of one wiring conductor 32A extends up to the base of a magnetic pole 18C, which is the 6th magnetic pole from the magnetic pole 18A as the first one, as counted clockwise in Fig. 3. Similarly, one end 32B of a second wiring conductor 32B extends up to the base of the 10th magnetic pole 18C. Also, one end 32Ca of a third wiring conductor 32C extends up to the base of the 5th magnetic pole 18F.

These one ends (32Aa, 32Ba and 32Ca) of the wiring conductors 32 are led into terminal holes (38Aa, 38Ba and 38Ca) of internal wiring terminals (38A, 38B and 38C). The wiring conductor 32B extends up to the inside of a terminal hole 38Da of a terminal 38D provided adjacent to the terminal 38B (see Figs. 7, 8). The terminals 38A, 38C have two terminal holes 38Aa, 38Ab and 38Ca, 38Cb, respectively; and to said one terminal holes 38Aa, 38Ca are led said one ends 32Aa, 32Ca of the wiring conductors 32A, 32C; and in said other terminal holes 38Ab, 38Cb are formed grooves through which coil ends of the magnetic poles 18B, 18E cross the terminals radially of the stator 10.

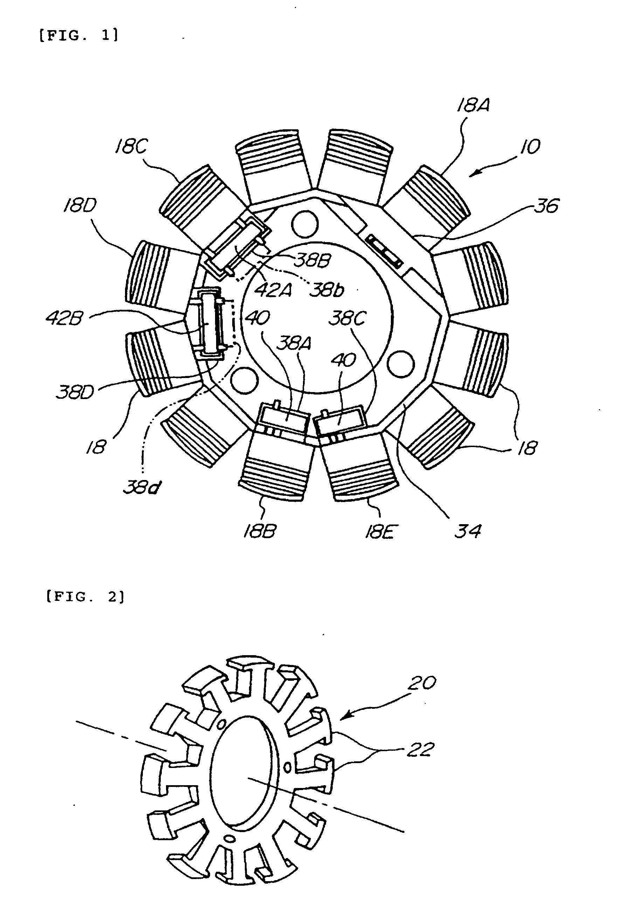

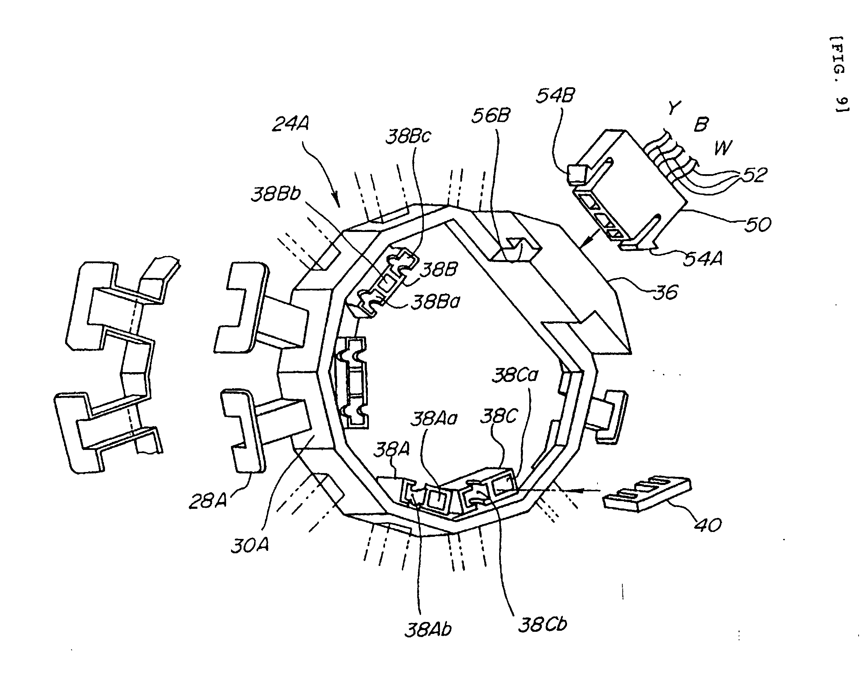

To these terminal holes 38Aa, 38Ab and 38Ca, 38Cb is adapted to be mounted detachably a connecting block 40 (Figs. 9, 1). The connecting block 40 is provided with a built-in connection circuit, and when the block is mounted on the terminal 38A, one end 32Aa of the wiring conductor 32A in the terminal hole 38Aa is connected to the coil end crossing the terminal hole 38Ab. Similarly, when the block 40 is mounted on the terminal 38C one end 32Ca of the wiring conductor 32C is connected to the coil end crossing the terminal hole 38Cb.

The terminal 38B is formed with three terminal holes 38Ba, 38Bb, 38Bc; into the central terminal hole 38Ba is led one end 32Ba of the wiring conductor 32B; and in the terminal holes 38Bb, 38Bc on both sides thereof are formed grooves through which coil ends of a magnetic pole 18D just before the magnetic pole 18C, and the magnetic pole 18C cross the terminal. The terminal 38D is formed with three terminal holes 38Da, 38Db, 38Dc; into the central terminal hole 38Da is led one end 32Bb of the wiring conductor 32B; and in the terminal holes 38Db, 38Dc on both sides thereof are formed grooves through which coil ends of a magnetic pole 18E just before the magnetic pole 18D, and the magnetic pole 18D cross the terminal.

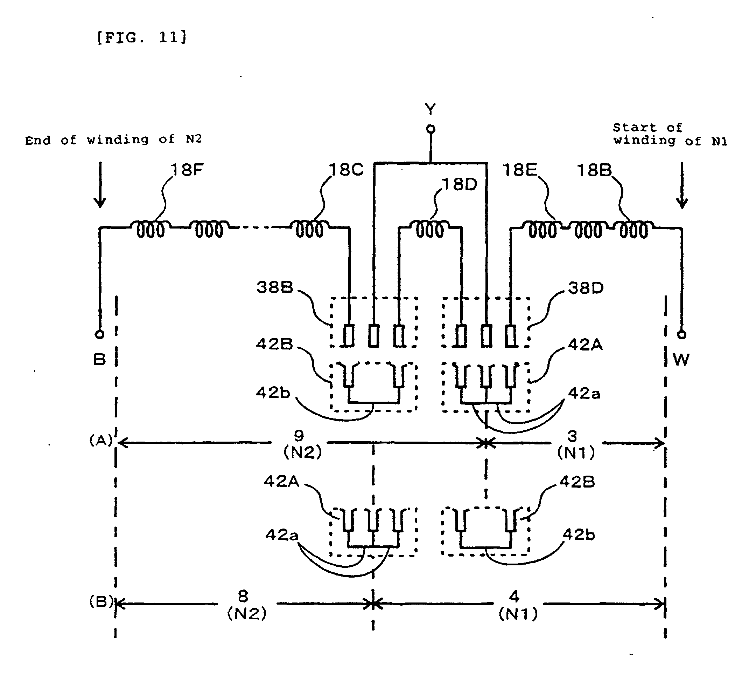

On these terminals 38B, 38D are adapted to be mounted other blocks (42A, 42B) similar to the foregoing block 40. The block 42A is used for taking out an intermediate tap, and herein referred to as an intermediate tap block. The block 42A, as shown in Fig. 11, contains a circuit for connecting three conductors in the terminals 38B, 38D when mounted on either of the terminals 38B, 38D.

For example, when the block 42A is mounted on the terminal 38B, coil ends of the magnetic poles 18D, 18C are electrically connected to one end 32Ba of the wiring conductor 32B. Similarly, when the block 42A is mounted on the terminal 38D, coil ends of the magnetic poles 18F, 18D are electrically connected to one end 32Bb of the wiring conductor 32B.

The block 42B is used for bypassing without need of taking out the intermediate tap, and herein referred to as a bypass block. The block 42B, as shown in Fig. 11, contains a circuit for connecting only two coil ends in the terminals 38B, 38D when mounted on either of the terminals 38B, 38D. For example, when the block 42B is mounted on the terminal 38B, coil ends of the coils 18E, 18D are connected.

Thus, in the case where the block 42A is mounted on the terminal 38D and the block 42B on the terminal 38B, as shown in Fig. 11(A), twelve stator coils 26 are divided into two coil groups N1, N2 of three coils constituting magnetic poles 18B-18E and nine coils constituting magnetic poles 18D-18F.

In the case where the block 42A is mounted on the terminal 38B and the block 42B on the terminal 38D, as shown in Fig. 11(B), twelve stator coils 26 are divided into two coil groups N1, N2 of four coils constituting magnetic poles 18B-18D and eight coils constituting magnetic poles 18C-18F. Thus, mounting positions of the blocks 42A, 42B are changed to alter the position of the intermediate tap, thereby allowing the distribution ratio of the twelve stator coils to be varied to 9:3 and 8:4.

According to this embodiment, the blocks 40, 42 are mounted on the internal wiring terminals 38 (38A, 38B, 38C and 38D), with coil ends passing through the grooves thereof, thereby allowing the coil ends to be electrically connected to the wiring conductors 32. Thus, the process of soldering external connection cords to the coil ends is not necessary, providing simplified connecting work.

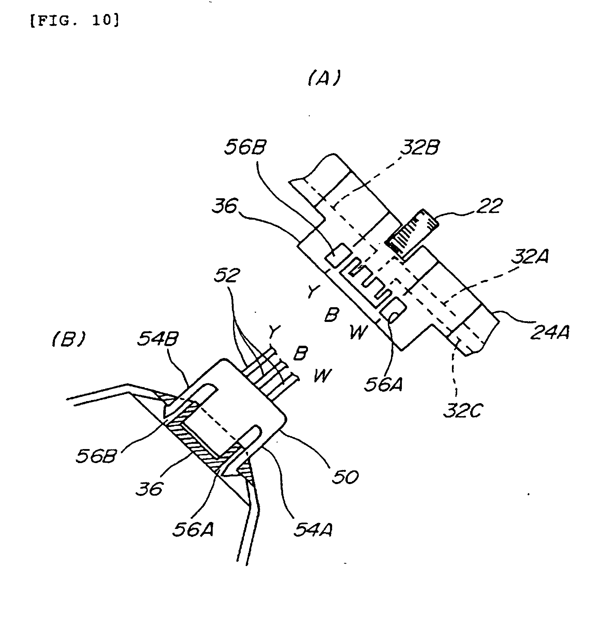

Into the terminal hole of the external connection terminal 36, as shown in Fig. 10(A), are led the other ends of three wiring conductors 32A, 32B, 32C. The coupler 50 coupled to the terminal 36 contains connecting terminals adapted to be brought into pressure-contact with the other ends of these wiring conductors 32 for electrical connection. These connecting terminals are connected to external wiring cords 52, which are colored white (W), black (B) and yellow (Y), respectively.

Thus, in the case (A) of Fig. 11 where the block 42A is mounted on the terminal 38B and the block 42B on the terminal 38D, between the white and black terminals of the cords 52 is connected a coil group N1 of three coils constituting magnetic poles 18B-18E, and between the black and yellow terminals is connected a coil group N2 of nine coils constituting magnetic poles 18D-18F. Similarly, in the case (B) of Fig. 11 where the block 42A is mounted on the terminal 38D and the block 42B on the terminal 38B, between the white and black terminals of the cords 52 is connected a coil group N1 of four coils and between the black and yellow terminals is connected a coil group N2 of eight coils. The coil group N1 generates a source voltage for lighting lamp devices, and the coil group N2 a charging voltage for a battery (not shown) as a power source for an ignition circuit or the like (see Fig. 3).

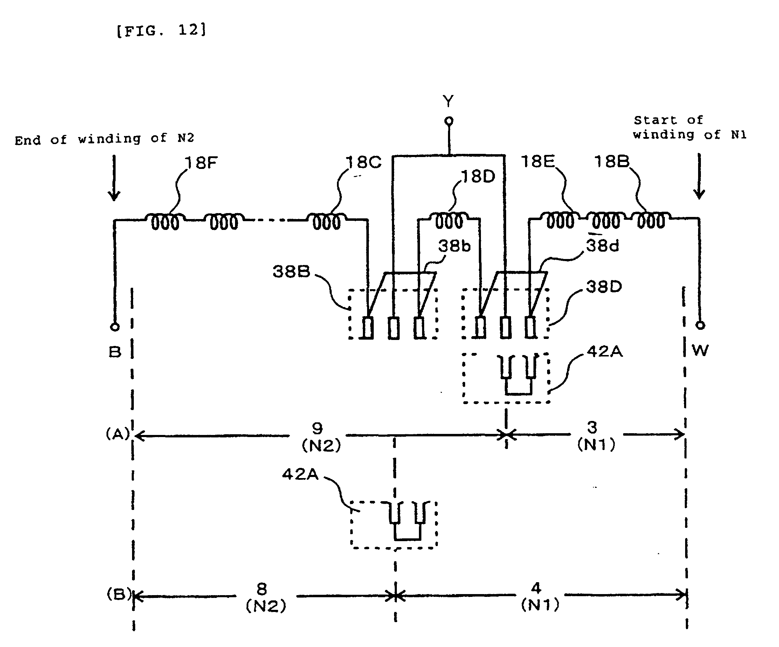

Fig. 12 is an illustration of another embodiment. In the embodiment described with reference to Figs. 1-11, the stator coils 26 led to the respective internal wiring terminals 38B, 38D are open to each other. That is, they are cut off. Therefore, the intermediate tap block 42A and the bypass block 42B are provided with bypass circuits for connecting coil ends of the stator coils 26, respectively. In Fig. 11, numerals 42a, 42b correspond the bypass circuits incorporated in the blocks 42A, 42B.

However, this bypass circuits may be provided in the internal wiring terminals 38B, 38D. In this case, the bypass circuits may be provided in such a manner as shown in Figs. 1, 3 by phantom lines 38b, 38d and in Fig. 12 by solid lines 38b, 38d. The bypass circuits 38b, 38d can be formed by a coil wire between two coil groups being adapted to bypass through these internal wiring terminals 38B, 38D. If the bypass circuits 38b, 38d are provided in the internal wiring terminals 38B, 38D, as described above, the foregoing bypass block 42B is unnecessary, as is clear from Fig. 12, providing a simplified structure.

Although this invention is applied to an outer-rotor type AC magnetogenerator in this embodiment, it may also be applied to an inner-rotor type generator. In such a case, the bobbin halves may be cut off annularly or partially at their outermost portions for the formation of terminals or insertion of wiring conductors.

Next, the effects of the invention are described.

According to the invention of claim 1 as described above, a bobbin is provided with a plurality of internal wiring terminals to which are led coil ends of two different stator coils and external connection wires; the stator coil ends led to these terminals are connected to each other by a bypass circuit; and an intermediate tap block for connecting the stator coil ends and the external connection wires, is mounted selectively on any of the internal connection terminals, whereby the distribution ratio of the number of stator coils can be varied. Therefore, the mounting position change of the intermediate tap block allows the voltage and power generated by coil groups to be changed easily. Thus, there is no need to redesign the whole generator, to remodel the dies of the bobbin, or to change setting of the winding machine when the voltage and power to be generated, are changed.

In the case where this invention is applied to an outer-stator type AC magnetogenerator, if stator coils are connected in series and the position of the intermediate tap is changed, the distribution ratio of the number of stator coils can be varied (claim 2). In such a case, the external connection wires can be wiring conductors inserted in a bobbin, which is advantageous to size reduction of the stator (claim 3).

Inserted wiring conductors and stator coil ends are led into adjacent terminal holes in the internal wiring terminal formed integral with a bobbin half, and there provided is an intermediate tap block adapted to be fitted in these terminal holes, so that the position of the intermediate tap can be changed if the combination of the block and the terminal is changed (claim 4).

A bypass circuit can be provided in the internal wiring terminal (claim 5). For example, a coil wire between two station coil groups may be adapted to bypass through the internal wiring terminal. In such a case, an intermediate tap block has only to be inserted in one internal wiring terminal, and no bypass blocks are necessary for other internal wiring terminals, thereby effecting decreased number of parts. The bypass circuit may be provided in a bypass block or an intermediate tap block to be inserted in the internal wiring terminal (claim 6).

The invention proposes a stator of an AC generator in which changing the positions of intermediate taps allow easy distribution change of the voltage and power generated by different coil groups without need of remodeling the bobbin or changing setup of the winding machine. In detail, according to the invention a stator of an AC generator comprises stator coils wound on the pole teeth of a stator core through a bobbin made of an insulating resin, and intermediate taps provided between different stator coils and adapted to be connected to external connection wires, wherein the stator comprises a plurality of internal wiring terminals, formed on the bobbin, to which are led coil ends of two different stator coils and one of the external connection wires; a bypass circuit for connecting the coil ends of the two different stator coils led to each of the internal wiring terminals; and an internal tap block insertable in each of the internal wiring terminals for connecting the coil ends of the two different stator coils to said one external connection wire, whereby the distribution ratio of the stator coils can be varied when the internal wiring terminal in which the intermediate tap block is to be inserted, is changed.

### Parts List

- 10:: Stator
- 12:: Rotor
- 18:: Magnetic pole
- 20:: Stator core
- 24:: Bobbin
- 24A, 24B:: Bobbin half
- 26:: Stator coil
- 32:: Wiring conductor (external connection wire)
- 36:: External connection terminal
- 38:: Internal connection terminal
- 38b,38d:: Bypass circuit
- 42A:: Intermediate tap block
- 42b:: Bypass block
- 42a,42b:: Bypass circuit

## Claims

1. A stator (10) of an AC generator having stator coils (26) wound on the pole teeth (22) of a stator core (20) through a bobbin (24) made of an insulating resin, and intermediate taps provided between different stator coils and adapted to be connected to external connection wires (52), said stator (10) comprising: a plurality of internal wiring terminals (38A, 38B, 38C), formed on said bobbin (24), to which are led coil ends of two different stator coils (18D, 18C; 18D, 18E) and one of said external connection wires;
a bypass circuit (38b, 38d) for connecting said coil ends of the two different stator coils led to said each internal wiring terminal (38A, 38B, 38C); and
an internal tap block (42A) insertable in said each internal wiring terminal (38A, 38B, 38C) for connecting said coil ends of the two different stator coils to said one external connection wire (52),
whereby the distribution ratio of said stator coils can be varied when the internal wiring terminal (38A, 38B, 38C), in which said intermediate tap block (42A) is to be inserted, is changed.

2. The stator of an AC generator of claim 1,
wherein said AC generator is an outer-rotor type AC magnetogenerator driven by an internal combustion engine, and stator coils (26) constituting more than three magnetic poles are connected in series and divided into a plurality of stator coil groups by means of said intermediate taps.

3. The stator of an AC generator of claim 1 or 2,
wherein said external connection wires (52) led to said internal wiring terminals (38A, 38B, 38C) are wiring conductors (32A, 32B, 32C) inserted in said bobbin (24).

4. The stator (10) of an AC generator of claim 1, 2 or 3, wherein said bobbin (24) is formed of a pair of bobbin halves (24A, 24B) surrounding the pole teeth (22) of the stator core (20); in each of said plurality of internal wiring terminals (38A, 38B, 38C) formed in a bobbin half (24A, 24B) with the wiring conductors (32) inserted therein, are formed a terminal hole to which is led the coil end of the stator coil (26), and another terminal hole to which is led the inserted wiring conductor (32), adjacent to each other; and in said intermediate tap block (42A) adapted to be inserted in said terminal holes, is provided a connection circuit for connecting said stator coil end and said wiring conductor (32)

5. The stator of an AC generator of any of claims 1-4, wherein said bypass circuit (42a, 42b) is provided on said internal wiring terminal (38A, 38B, 38C).

6. The stator of an AC generator of any of claims 1-4, wherein two stator coil ends led to said internal wiring terminal (38A, 38B, 38C) are open to each other, and said bypass circuit (42a, 42b) is provided on said bypass block (42b) or said intermediate tap block (42A) adapted to be inserted in said internal wiring terminal (38A, 38B, 38C).

## Patentansprüche

1. Stator (10) eines Wechselstromgenerators mit Statorspulen (26), die um die Polzähne (22) eines Statorkerns (20) durch einen Spulenkörper (24) gewickelt sind, der aus einem isolierenden Harz hergestellt ist, und Zwischenanzapfungen, die zwischen unterschiedlichen Statorspulen vorgesehen sind und derart eingerichtet sind, dass sie mit externen Verbindungsdrähten (52) verbunden sind, wobei der Stator (10) aufweist:
eine Vielzahl interner Verdrahtungsanschlüsse (38A, 38B, 38C), die an dem Spulenkörper (24) ausgebildet sind, zu denen Spulenenden zweier unterschiedlicher Statorspulen (18D, 18C; 18D, 18E) sowie einer der externen Verbindungsdrähte geführt sind,
eine Umgehungsschaltung (38b, 38d) zur Verbindung der Spulenenden der zwei unterschiedlichen Statorspulen, die zu jedem internen Verdrahtungsanschluss (38A, 38B, 38C) geführt sind, und
einen internen Anzapfungsblock (42A), der in jeden internen Verdrahtungsanschluss (38A, 38B, 38C) einsetzbar ist, zur Verbindung der zwei unterschiedlichen Statorspulen mit dem einen externen Verbindungsdraht (52),
wobei das Verteilungsverhältnis der Statorspulen variiert werden kann, wenn der interne Verdrahtungsanschluss (38A, 38B, 38C) geändert wird, in dem der Zwischenanzapfungsblock (42A einzusetzen ist.

2. Stator eines Wechselspannungsgenerators nach Anspruch 1, wobei der Wechselstromgenerator ein Wechselstrom-Magnetinduktor der Bauart mit außen liegendem Rotor ist, der durch eine Brennkraftmaschine angetrieben wird, und die Statorspulen (26), die mehr als drei Magnetpole bilden, in Reihe geschaltet und mittels der Zwischenanzapfungen in eine Vielzahl von Statorspulengruppen unterteilt sind.

3. Stator eines Wechselstromgenerators nach Anspruch 1 oder 2, wobei die externen Verbindungsdrähte (52), die zu den internen Verdrahtungsanschlüssen (38A, 38B, 38C) geführt sind, Verdrahtungsleitungen (32A, 32B, 32C) sind, in den Spulenkörper (24) eingesetzt sind.

4. Stator (10) eines Wechselstromgenerators nach einem der Ansprüche 1, 2 oder 3, wobei der Spulenkörper (24) aus einem Paar Spulenkörperhälften (24A, 24B) geformt ist, die die Polzähne (22) des Statorkerns (20) umgeben, wobei in jedem aus der Vielzahl der internen Verdrahtungsanschlüsse (38A, 38B, 38C), die in einer Spulenkörperhälfte (24A, 24B) mit den darin eingesetzten Verdrahtungsleitungen (32) geformt sind, eine Anschlussöffnung, zu der das Spulenende der Statorspule (26) geführt ist, und eine weitere Anschlussöffnung, zu der die eingesetzte Verdrahtungsleitung (32) geführt ist, zueinander benachbart geformt sind sowie in dem Zwischenanzapfungsblock (42A), der eingerichtet ist, in die Anschlussöffnungen eingesetzt zu werden, eine Verbindungsschaltung zur Verbindung des Statorspulenendes mit der Verbindungsleitung (32) vorgesehen ist.

5. Stator eines Wechselstromgenerators nach einem der Ansprüche 1 bis 4, wobei die Umgehungsschaltung (42a, 42b) an dem internen Verdrahtungsanschluss (38A, 38B, 38C) vorgesehen ist.

6. Stator eines Wechselstromgenerators nach einem der Ansprüche 1 bis 4, wobei zwei Statorspulenenden, die zu dem internen Verdrahtungsanschluss (38A, 38B, 38C) geführt sind, zueinander offen sind, und die Umgehungsschaltung (42a, 42b) an dem Umgehungsblock (42b) oder dem Zwischenanzapfungsblock (42A) vorgesehen ist, der eingerichtet ist, in dem internen Verdrahtungsanschluss (38A, 38B, 38C) eingesetzt zu werden.

## Revendications

1. Stator (10) pour un générateur à courant alternatif ayant des bobines de stator (26) enroulées sur les dents polaires (22) d'un noyau de stator (20) à travers une bobine (24) réalisée en résine isolante et des prises intermédiaires prévues entre différentes bobines de stator et adaptées pour être connectées à des fils de connexion externes (52), ledit stator (10) comprenant :
une pluralité de bornes de câblage internes (38A, 38B, 38C), formées sur ladite bobine (24), à laquelle sont amenées les têtes de bobine de deux bobines de stator différentes (18D, 18C ; 18D, 18E) et un desdits fils de connexion externes ;
un circuit de dérivation (38b, 38d) pour connecter lesdites têtes de bobine de deux bobines de stator différentes amenées à ladite chaque borne de câblage interne (38A, 38B, 38C) ; et
un bloc de prise interne (42A) enfichable dans ladite chaque borne de câblage interne (38A, 38B, 38C) pour connecter lesdites têtes de bobine de deux bobines de stator différentes audit un fil de connexion externe (52),
moyennant quoi le rapport de distribution desdites bobines de stator peut être modifié quand la borne de câblage interne (38A, 38B, 38C), dans laquelle ledit bloc de prise intermédiaire (42A) doit être inséré, est changée.

2. Stator pour un générateur à courant alternatif selon la revendication 1, dans lequel ledit générateur à courant alternatif est un magnétogénérateur à courant alternatif du type à rotor extérieur entraîné par un moteur à combustion interne et les bobines de stator (26) constituant plus de trois pôles magnétiques sont connectées en série et divisées en une pluralité de groupes de bobines de stator au moyen desdites prises intermédiaires.

3. Stator pour un générateur à courant alternatif selon la revendication 1 ou 2, dans lequel lesdits fils de connexion externes (52) amenés aux dites bornes de câblage internes (38A, 38B, 38C) sont des conducteurs de câblage (32A, 32B, 32C) insérés dans ladite bobine (24).

4. Stator (10) pour un générateur à courant alternatif selon la revendication 1, 2 ou 3, dans lequel ladite bobine (24) est formée d'une paire de moitiés de bobine (24A, 24B) entourant les dents polaires (22) du noyau de stator (20) ; dans chacune de ladite pluralité de bornes de câblage internes (38A, 38B, 38C) formées dans une moitié de bobine (24A, 24B) avec les conducteurs de câblage (32) insérés à l'intérieur, sont formés un trou de borne auquel est amenée la tête de bobine de la bobine de stator (26) et un autre trou de borne auquel est amené le conducteur de câblage inséré (32), adjacents l'un à l'autre ; et dans ledit bloc de prise intermédiaire (42A) adapté pour être inséré dans lesdits trous de borne, il est prévu un circuit de connexion pour connecter ladite tête de bobine de stator et ledit conducteur de câblage (32).

5. Stator pour un générateur à courant alternatif selon l'une quelconque des revendications 1 à 4, dans lequel ledit circuit de dérivation (42a, 42b) est prévu sur ladite borne de câblage interne (38A, 38B, 38C).

6. Stator pour un générateur à Stator pour un générateur à courant alternatif selon l'une quelconque des revendications 1 à 4, dans lequel deux têtes de bobine de stator amenées à ladite borne de câblage interne (38A, 38B, 38C) sont ouvertes l'une par rapport à l'autre et ledit circuit de dérivation (42a, 42b) est prévu sur ledit bloc de dérivation (42b) ou ledit bloc de prise intermédiaire (42A) adapté pour être inséré dans ladite borne de câblage interne (38A, 38B, 38C).
